# EUROPÄISCHE PATENTSCHRIFT

(11) **EP 2 283 323 B1**
(45) Veröffentlichungstag und Bekanntmachung des Hinweises auf die Patenterteilung: **28.09.2011**
(21) Anmeldenummer: 09749694.7
(22) Anmeldetag: 22.04.2009
(51) Int. Cl.: G01D 11/24

(54) **MODULAR AUFGEBAUTES MESSGERÄT MIT KLEMMUNG GEGEN VERDREHEN**
MODULAR MEASURING DEVICE WITH ANTI-ROTATION CLAMPING
APPAREIL DE MESURE MODULAIRE AVEC BLOCAGE EN ROTATION

(30) Priorität: 19.05.2008 DE 102008001865
(43) Veröffentlichungstag der Anmeldung: 16.02.2011
(73) Patentinhaber: Endress+Hauser GmbH+Co. KG, 79689 Maulburg (DE)
(72) Erfinder: DI COSOLA, Vito, 79258 Hartheim (DE); TANNER, Jürgen, 79400 Kandern (DE)
(74) Vertreter: Andres, Angelika Maria
(86) Internationale Anmeldenummer: PCT/EP2009/054770
(87) Internationale Veröffentlichungsnummer: WO 2009/141204

(56) Entgegenhaltungen:
- WO-A-02/052239
- WO-A-2005/071379
- DE-A1- 10 232 088
- DE-A1- 19 547 890
- DE-C2- 4 394 395

## Beschreibung

Die vorliegende Erfindung betrifft ein Messgerät, insbesondere ein Messgerät der industriellen Prozessmesstechnik zum Ermitteln einer Prozessmessgröße eines Mediums.

Derartige Messgeräte sind häufig aus Baugruppen zusammengesetzt und umfassen eine Sensorbaugruppe und eine Auswertebaugruppe die mit der Baugruppe verbunden ist. Hierzu kann beispielsweise ein Gehäuse der Auswertebaugruppe mit seinem Gehäusehals auf ein Gehäuse der Sensorbaugruppe geschraubt werden, was sich insbesondere für gegossene Gehäuse der Auswertebaugruppe anbietet, in denen Gewinde einfach realisierbar sind. Eine solche Schraubverbindung mit einer Verdrehsicherung zwischen einem Sensorbaugruppengehäuse und einem Gehäuse für eine Auswertebaugruppe ist beispielsweise in der Offenlegungsschrift DE10232088 A1 offenbart.

Für bestimmte Anwendungsbereiche, insbesondere für Anwendungsbereiche mit besonderen Hygieneanforderungen werden jedoch Edelstahlgehäuse für die Auswertebaugruppe bevorzugt, die in einem Tiefziehverfahren hergestellt sind. In solchen Gehäusen ist ein entsprechendes Gewinde nur mit unverhältnismäßig großem Aufwand realisierbar. Dennoch ist es beispielsweise aus Gründen der Plattformtechnologie heraus wünschenswert, auch solche Edelstahlgehäuse auf Gewinden für herkömmliche Gussgehäuse sicher Montieren zu können.

Es ist daher die Aufgabe der vorliegenden Erfindung ein Messgerät bereitzustellen, welches eine zuverlässige Montage einer Auswertebaugruppe an einer Sensorbaugruppe ermöglicht.

Die Aufgabe wird erfindungsgemäß gelöst durch das Messgerät gemäß dem unabhängigen Patentanspruch 1.

Das erfindungsgemäße Messgerät, umfasst eine Sensorbaugruppe, und eine Auswertebaugruppe, die an der Sensorbaugruppe montiert ist, wobei die Sensorbaugruppe ein erstes Bauteil mit einem ersten Gewinde aufweist und die Auswertebaugruppe ein zweites Bauteil mit einem zweiten Gewinde aufweist, wobei die Gewinde durch Verschrauben ineinander eingreifen, wobei das erste oder das zweite Bauteil einen im Bereich seines Gewindes Schlitz aufweist, welcher im wesentlichen in einer Ebene senkrecht zur Gewindeachse in das Bauteil hinein verläuft, wobei durch den Schlitz ein erster Klemmschenkel und ein zweiter Klemmschenkel des Bauteils gebildet werden, die durch den Schlitz voneinander getrennt sind, wobei an dem Bauteil weiterhin ein Stellkörper angeordnet ist, der an den ersten Klemmschenkel und den zweiten Klemmschenkel angreift und die Klemmschenkel gegeneinander auslenkt, wodurch das erste Gewinde und das zweite Gewinde gegeneinander geklemmt und gegen Verdrehen gesichert sind.

In einer Ausgestaltung der Erfindung umfasst der Stellkörper eine Stellschraube, welche in eine Gewindebohrung in axialer Richtung einem der Klemmschenkel eingreift und die Klemmschenkel entweder auseinanderdrückt oder zu zusammenzieht.

In einer Ausgestaltung der Erfindung umfasst das erste Bauteil ein Sensorbaugruppengehäuse mit einem Außengewinde, auf welches eine Halsöffnung eines Auswertebaugruppengehäuses aufgesteckt ist, wobei das Außengewinde in einen Innenraum des Auswertebaugruppengehäuses der Auswertebaugruppe hineinragt, wobei das zweite Bauteil eine Haltemutter mit dem ersten und dem zweiten Klemmschenkel umfasst, die auf das Außengewinde geschraubt ist und gegenüber dem Sensorbaugruppengehäuse durch die Klemmwirkung der Klemmschenkel gegen Verdrehen gesichert ist, wobei die Haltemutter das Auswertebaugruppengehäuse formschlüssig zumindest in axialer Richtung sichert.

In einer Weiterbildung der Erfindung ist das Sensorbaugruppengehäuse von der Haltemutter zusätzlich formschlüssig gegen Verdrehen gesichert.

In ein einer Weiterbildung der Erfindung enthält die Auswertebaugruppe elektronische Komponenten zum Verarbeiten von Signalen der Sensorbaugruppe, wobei die Haltemutter einen Trägerkörper aufweist, an dem elektronische Komponenten der Auswertebaugruppe montiert sind.

Gemäß einer Weiterbildung der Erfindung umfasst das Auswertebaugruppengehäuse einen metallischen Werkstoff, insbesondere Edelstahl, wobei das Auswertebaugruppengehäuse in diesem Fall beispielsweise im Tiefziehverfahren gefertigt sein kann.

Gemäß einer Weiterbildung der Erfindung umfasst die Haltemutter einen metallischen Werkstoff, insbesondere Aluminium, oder einen Kunststoff, insbesondere ein Elastomer, wobei der Kunststoff zum Zwecke der elektromagnetischen Verträglichkeit eine metallisierte Oberfläche aufweisen kann.

Das erfindungsgemäße Messgerät ist insbesondere ein Messgerät der industriellen Prozessmesstechnik zum Ermitteln einer Prozessmessgröße eines Mediums. Solche Prozessmessgrößen sind beispielsweise Absolutdruck, Relativdruck, Differenzdruck, Temperatur, Füllstand, Masse- oder Volumendurchfluss, Dichte, Zähigkeit, pH-Wert, Redox-Potential, Leitfähigkeit, Feuchte, Wärmemenge, oder eine Stoffkonzentration.

Die Erfindung wird nun anhand eines in den Zeichnungen dargestellten Ausführungsbeispiels erläutert.

Es zeigt:
- Fig. 1:: eine Explosionszeichnung eines Ausführungsbeispiels eines erfindungsgemäßen Messgerätes; und
- Fig. 2:: einen Längsschnitt durch ein Ausführungsbeispiel eines erfindungsgemäßen Messgerätes.

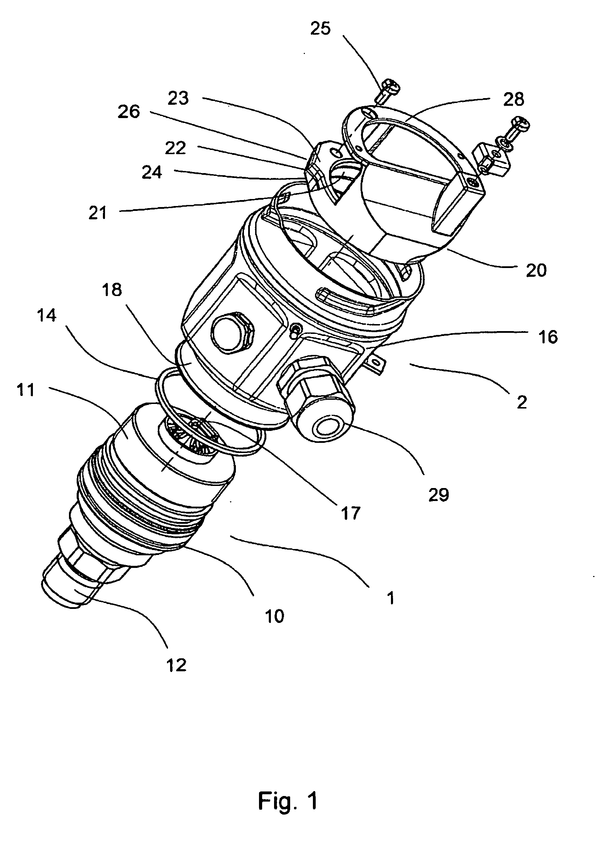

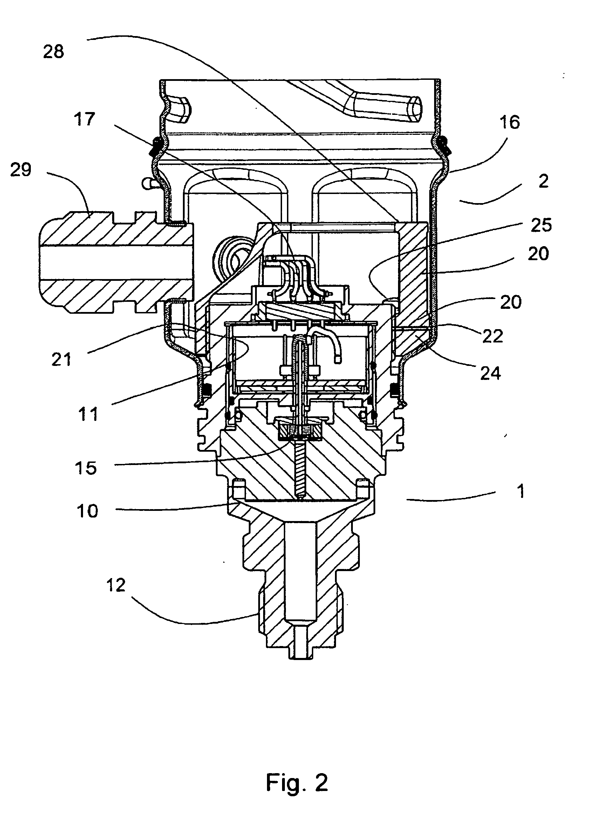

Das in Fign. 1 und 2 gezeigte Messgerät ist ein Absolut- oder Relativdrucksensor mit einer Sensorbaugruppe 1 und einer Auswertebaugruppe 2. Die Sensorbaugruppe 1 umfasst ein abschnittsweise zylindrisches Sensorbaugruppengehäuse 10 mit einem Auswertebaugruppenanschlussgewinde 11 auf einem ersten Endabschnitt seiner Mantelfläche und ein Prozessanschlussgewinde 12 an einem zweiten Endabschnitt zum Anschluss des Messgerätes an eine Leitung oder einen Behälter.

Die Auswertebaugruppe umfasst ein Auswertebaugruppengehäuse 16 aus Edelstahl welches in einem Tiefziehverfahren hergestellt wurde. Dieses Auswertebaugruppengehäuse 16 weist einen Gehäusehals 18 auf, mit dem es unter Einschluss eines Dichtrings 14 auf das Sensorbaugruppengehäuse 10 aufgesetzt ist, so dass das Auswertebaugruppenanschlussgewinde 11 in einen Innenraum des Auswertebaugruppengehäuses hineinragt.

Die Auswertebaugruppe umfasst ferner eine Haltemutter 20 aus Aluminium mit einem als Innengewinde gestaltetes Sensorbaugruppen Anschlussgewinde 21, mit welchem die Haltemutter auf das Auswertebaugruppenanschlussgewinde 11, geschraubt ist. Die Haltemutter 20 weist einen Schlitz 22 auf der in einer Ebene senkrecht zur Gewindeachse verläuft und den Abschnitt der Haltemutter 20 in dem das Sensorbaugruppenanschlussgewinde 21 verläuft in einen ersten Klemmschenkel 23 und einen zweiten Klemmschenkel teilt, wobei der zweite Klemmschenkel der der Sensorbaugruppe zugewandt ist und das Auswertebaugruppengehäuse 16 formschlüssig gegen Abziehen von dem Sensorbaugruppengehäuse 10 sichert. Eine Klemmschraube 25 greift durch eine Bohrung 26 in axialer Richtung durch den ersten Klemmschenkel 23 in ein mit der Bohrung fluchtendes Klemmgewinde in dem zweiten Klemmschenkel 24 und zieht die beiden Klemmschenkel zusammen, wodurch das Sensorbaugruppenanschlussgewinde 21 und das Auswertebaugruppenanschlussgewinde 11 gegeneinander verklemmt sind und nicht weiter verdreht werden können.

Das Auswertebaugruppengehäuse 16 weist in einem mittleren Abschnitt einen polygonalen Querschnitt auf, in welchen eine Kontur der Haltemutter 20 formschlüssig eingreift. Damit ist das Auswertebaugruppengehäuse gegen Verdrehen gegenüber der Sensorbaugruppe 1 gesichert.

Die Haltemutter 20 umfasst weiterhin einen Träger 28 , an dem hier nicht dargestellte Komponenten einer Auswerteschaltung montiert sind, die über eine Schnittstelle 12 an der Stirnseite des Sensorbaugruppengehäuses 10 an einen Sensor-ASIC 15 im Sensorbaugruppengehäuse 10 angeschlossen ist. Die von der Auswerteschaltung verarbeiteten Sensorsignale werden über eine hier nicht dargestellte Anschlussleitung durch eine seitlich am Auswertebaugruppengehäuse 16 angeordnete Anschlussbuchse 29 aus dem Gehäuse herausgeführt. Das Auswertebaugruppengehäuse 16 ist auf seiner der Sensorbaugruppe 1 abgewandten Stirnseite mit einem hier nicht dargestellten Deckel, insbesondere einem Edelstahldeckel, der ggf. ein Sichtfenster enthalten kann, verschlossen.

## Patentansprüche

1. Messgerät, umfassend:
eine Sensorbaugruppe (1), und
eine Auswertebaugruppe (2), die an der Sensorbaugruppe montiert ist,
wobei die Sensorbaugruppe ein erstes Bauteil (10) mit einem ersten Gewinde (11) aufweist und die Auswertebaugruppe ein zweites Bauteil (20) mit einem zweiten Gewinde (21) aufweist,
wobei die Gewinde durch Verschrauben ineinander eingreifen,
wobei das erste oder das zweite Bauteil (20) einen Schlitz (22) aufweist, welcher im wesentlichen in einer Ebene senkrecht zur Gewindeachse in das Bauteil (20) hinein verläuft,
wobei durch den Schlitz ein erster Klemmschenkel (23) und ein zweiter Klemmschenkel (24) des Bauteils (20) gebildet werden, die durch den Schlitz (22) voneinander getrennt sind,
wobei an dem Bauteil (20) weiterhin ein Stellkörper angeordnet ist, der an den ersten Klemmschenkel und den zweiten Klemmschenkel angreift und die Klemmschenkel im Wesentlichen in axialer Richtung gegeneinander auslenkt,
wodurch das erste Gewinde (11) und das zweite Gewinde (21) gegeneinander geklemmt und gegen Verdrehen gesichert sind.

2. Messgerät nach Anspruch 1, wobei der Stellkörper eine Stellschraube (25) umfasst, welche in eine Gewindebohrung in axialer Richtung in einem der Klemmschenkel eingreift und die Klemmschenkel auseinanderdrückt oder zusammenzieht.

3. Messgerät nach Anspruch 1 oder 2, wobei das erste Bauteil ein Sensorbaugruppengehäuse (10) mit einem Außengewinde (11) umfasst, auf welches eine Halsöffnung (18) eines Auswertebaugruppengehäuses (16) aufgesteckt ist, wobei das Außengewinde (11) in einen Innenraum des Auswertebaugruppengehäuses (16) der Auswertebaugruppe (2) hineinragt, wobei das zweite Bauteil (20) eine Haltemutter mit dem ersten und dem zweiten Klemmschenkel (23, 24) umfasst, die auf das Außengewinde (11) geschraubt ist und gegenüber dem Sensorbaugruppengehäuse (10) durch die Klemmwirkung der Klemmschenkel gegen Verdrehen gesichert ist, wobei die Haltemutter (20) das Auswertebaugruppengehäuse (16) formschlüssig zumindest gegen Abziehen von der Sensorbaugruppe sichert.

4. Messgerät nach Anspruch 3, wobei das Sensorbaugruppengehäuse von der Haltemutter zusätzlich formschlüssig gegen Verdrehen gesichert ist.

5. Messgerät nach Anspruch 3 oder 4, wobei die Auswertebaugruppe elektronische Komponenten zum Verarbeiten von Signalen der Sensorbaugruppe umfasst, und wobei die Haltemutter einen Trägerkörper aufweist, an dem elektronische Komponenten der Auswertebaugruppe montiert sind.

6. Messgerät nach einem der Ansprüche 3 bis 5, wobei das Auswertebaugruppengehäuse einen metallischen Werkstoff umfasst, insbesondere Edelstahl.

7. Messgerät nach Anspruch 6, wobei das Auswertebaugruppengehäuse im Tiefziehverfahren gefertigt ist.

8. Messgerät nach einem der Ansprüche 3 bis 7, wobei die Haltemutter einen metallischen Werkstoff, insbesondere Aluminium, umfasst.

9. Messgerät nach einem der Ansprüche 3 bis 7, wobei die Haltemutter einen Kunststoff umfasst, insbesondere ein Elastomer.

10. Messgerät nach Anspruch 9, wobei der Kunststoff eine metallisierte Oberfläche aufweist.

11. Messgerät nach einem der vorhergehenden Ansprüche, wobei das Messgerät ein Messgerät der industriellen Prozessmesstechnik zum Ermitteln einer Prozessmessgröße eines Mediums ist.

## Claims

1. Measuring device, comprising:
a sensor assembly (1) and
an evaluation assembly (2) which is mounted on the sensor assembly,
wherein the sensor assembly has a first component (10) with a first thread (11) and the evaluation assembly has a second component (20) with a second thread (21),
wherein the threads engage in one another by screwing action,
wherein the first or the second component (20) has a slot (22) which essentially extends into the component (20) at a plane perpendicular to the thread axis,
wherein, as a result of the slot, a first clamping leg (23) and a second clamping leg (24) of the component (20) are formed, both legs being separated from one another by the slot (22),
wherein an actuating element is also arranged on the component (20), which acts on the first clamping leg and the second clamping leg and essentially deflects the clamping legs in an axial direction relative to one another,
whereby the first thread (11) and the second thread (21) are clamped against one another and are secured against rotation.

2. Measuring device as per Claim 1, wherein the actuating element comprises an actuating screw (25), which engages - in an axial direction - in a threaded bore in one of the clamping legs and pushes the clamping legs apart or pulls them together.

3. Measuring device as per Claim 1 or 2, wherein the first component comprises a sensor assembly housing (10) with an external thread (11), onto which a neck opening (18) of an evaluation assembly housing (16) is fitted, wherein the external thread (11) projects into an inner space of the evaluation assembly housing (16) of the evaluation assembly (2), wherein the second component (20) comprises a holding nut with the first and second clamping leg (23, 24), said holding nut being screwed onto the external thread (11) and secured against rotation by the clamping effect of the clamping legs, wherein the holding nut (20) secures the evaluation assembly housing (16) in a positive-locking manner at least against removal from the sensor assembly.

4. Measuring device as per Claim 3, wherein the sensor assembly housing is additionally secured against rotation by the holding nut in a positive-locking manner.

5. Measuring device as per Claim 3 or 4, wherein the evaluation assembly comprises electronic components for processing signals of the sensor assembly, and wherein the holding nut has a carrier element on which electronic components of the evaluation assembly are mounted.

6. Measuring device as per one of the Claims 3-5, wherein the evaluation assembly housing comprises a metal material, particularly stainless steel.

7. Measuring device as per Claim 6, wherein the evaluation assembly housing is manufactured by a deep-drawing method.

8. Measuring device as per one of the Claims 3-7, wherein the holding nut comprises a metal material, particularly aluminum.

9. Measuring device as per one of the Claims 3-7, wherein the holding nut comprises a plastic, particularly an elastomer.

10. Measuring device as per Claim 9, wherein the plastic has a metal surface.

11. Measuring device as per one of the previous claims, wherein the measuring device is a measuring device used in industrial process measuring technology for determining a process measured variable of a medium.

## Revendications

1. Transmetteur, comprenant :
un module capteur (1), et
un module d'exploitation (2), lequel est monté sur le module capteur,
le module capteur comportant un premier composant (10) avec un premier filetage (11) et le module d'exploitation un deuxième composant (20) avec un deuxième filetage (intérieur) (21),
les filetages s'adaptant par vissage,
le premier et ou le deuxième composant (20) présentant une fente (22), laquelle s'étend pour l'essentiel dans un plan perpendiculaire à l'axe du filetage, à l'intérieur du composant (20),
une première branche de serrage (23) et une deuxième branche de serrage (24) du composant (20) étant formées par la fente, lesquelles sont séparées l'une de l'autre par la fente (22),
un corps de réglage étant par ailleurs disposé sur le composant (20), lequel corps est appliqué sur la première branche de serrage et la deuxième branche de serrage, et écarte les branches de serrage pour l'essentiel en direction axiale,
ce par quoi le premier filetage (11) et le deuxième filetage (21) sont serrés l'un par rapport à l'autre et protégés contre une rotation.

2. Transmetteur selon la revendication 1, pour lequel le corps de réglage comprend une vis de réglage (25), laquelle s'engage dans un alésage taraudé en direction axiale dans l'une des branches de serrage et écarte ou resserre les branches de serrage.

3. Transmetteur selon la revendication 1 ou 2, pour lequel le premier composant comprend un boîtier de module capteur (10) avec un filetage extérieur (11), sur lequel est emboîté une ouverture à col (18) d'un boîtier de module d'exploitation (16), le filetage extérieur (11) se prolongeant à l'intérieur du boîtier de module d'exploitation (16) du groupe d'exploitation (2), le deuxième composant (20) comportant un écrou de maintien avec la première et la deuxième branche de serrage (23, 24), lequel est vissé sur le filetage extérieur (11) et protégé contre une rotation par rapport au boîtier de module capteur (10) au moyen de l'effet de serrage des branches de serrage, l'écrou de maintien (20) protégeant à l'aide d'une forme adaptée le boîtier de module d'exploitation (16), au minimum contre le retrait du module capteur.

4. Transmetteur selon la revendication 3, pour lequel le boîtier du module d'exploitation est pourvu d'une protection supplémentaire contre la rotation à l'aide de l'écrou de maintien doté d'une forme adaptée.

5. Transmetteur selon la revendication 3 ou 4, pour lequel le module d'exploitation comprend des composants électroniques destinés au traitement des signaux du module capteur, et pour lequel l'écrou de maintien présente un corps support, sur lequel sont montés les composants électroniques du module d'exploitation.

6. Transmetteur selon la revendication 3 à 5, pour lequel le boîtier du module d'exploitation comprend un matériau métallique, notamment en acier inoxydable.

7. Transmetteur selon la revendication 6, pour lequel le boîtier du module d'exploitation est fabriqué selon le procédé d'emboutissage profond.

8. Transmetteur selon l'une des revendications 3 à 7, pour lequel l'écrou de maintien comprend un matériau métallique, notamment en aluminium.

9. Transmetteur selon l'une des revendications 3 à 7, pour lequel l'écrou de maintien comprend une matière plastique, notamment un élastomère.

10. Transmetteur selon la revendication 9, pour lequel la matière plastique présente une surface métallisée.

11. Transmetteur selon l'une des revendications précédentes, pour lequel le transmetteur est un appareil de mesure de la technique de mesure des process industriels destiné à la détermination d'une grandeur de mesure process d'un produit.
